# EUROPÄISCHE PATENTSCHRIFT

(11) **EP 2 843 320 B1**
(45) Veröffentlichungstag und Bekanntmachung des Hinweises auf die Patenterteilung: **03.07.2019**
(21) Anmeldenummer: 13198825.5
(22) Anmeldetag: 20.12.2013
(51) Int. Cl.: F24S 20/50, H02S 30/20, F24S 25/00, F24S 25/16, F24S 30/425, F24S 25/70, F24S 25/13

(54) **Modulträger**
Module carrier
Support de module

(30) Priorität: 02.09.2013 CH 14952013
(43) Veröffentlichungstag der Anmeldung: 04.03.2015
(73) Patentinhaber: Smartvolt AG, 3362 Niederönz (CH)
(72) Erfinder: Kilian WEHRLI, 2563 Ipsach (CH)
(74) Vertreter: BOVARD AG

(56) Entgegenhaltungen:
- DD-A1- 256 554
- DE-A1- 3 612 680
- US-A- 5 131 955
- US-A1- 2012 313 569

## Beschreibung

Die vorliegende Erfindung betrifft einen Modulträger für mehrere Kollektormodule, wie etwa Solarmodule oder Wärmespeichermodule, die in Reihe angeordnet und in einem bestimmten Winkel ausgerichtet werden.

Aus dem Stand der Technik sind diverse Trägersysteme für Kollektormodule bekannt, bei welchen einzelne Module hintereinander in Reihe montiert und in einer Richtung zur Sonne möglichst optimal ausgerichtet werden sollen. Meist wird hierfür ein langgestreckter Balken oder eine Schiene oder auch zwei parallel angeordnete Balken oder Schienen verwendet, die auf einem Untergrund, wie etwa einem Dach oder einer Wand, montiert werden. Anschliessend werden die einzelnen Kollektormodule mit Hilfe von Trägern oder Tragrahmen einzeln auf den Balken, bzw. Schienen befestigt. Die Träger können dabei auf bestimmte Anstellwinkel der Module abgestimmte Formen aufweisen, so dass hintereinander angeordnete Module jeweils denselben Anstellwinkel aufweisen. Eine solche Montage ist zeitaufwendig und ein überwiegender Teil der Montagearbeiten muss an Ort und Stelle ausgeführt werden.

Aus der EP 2402679 ist z. B. eine Montagevorrichtung für Solarmodule bekannt, bei der zwei parallele Schienen mit Rasteinrichtungen vorgesehen sind. Auf den Schienen können Stützelement mittels einer Scharnierverbindung umklappbar in den Rasteinrichtungen angeordnet werden, so dass die Stützelemente an den Schienen vormontiert werden können. Dabei können Stützelemente unterschiedlicher Länge für unterschiedliche Anstellwinkel der Solarmodule verwendet werden. Zum Transport der Montagevorrichtung können die Stützelemente eingeklappt werden, so dass die Schienen stapelbar sind. Am Ort der Montage werden die Schienen befestigt und die Stützelemente aufgestellt. Anschliessend werden darauf die Solarmodule befestigt, so dass diese alle im gleichen Anstellwinkel vorgesehen sind. Der Montageaufwand, an dem für die Solarmodule vorgesehenen Ort, ist aufgrund der separaten Montage von Schienen und Modulen zeitaufwendig. Ferner kann mit den starren Schienen und vorausgewählten Stützelementen nur bedingt auf unterschiedliche Formgebung eines Untergrunds eingegangen werden. US 5 131 955 offenbart einen Modulträger zum hintereinander Anordnen mehrerer Kollektormodule gemäß dem Oberbegriff des Anspruchs 1.

Es ist daher eine Aufgabe der vorliegenden Erfindung einen Modulträger für mehrere Kollektormodule bereitzustellen, der eine einfache und schnelle Ausrichtung der Module ermöglicht, der den Montageaufwand am Montageort verringert, einfach in der Handhabung ist und eine variable Positionierung der Module ermöglicht.

Diese Aufgabe wird von der Erfindung durch einen Modulträger nach Anspruch 1 und von einem Kollektorsystem nach Anspruch 12 erfüllt. Vorteilhafte Ausgestaltungen und verschiedene Ausführungsbeispiele sind in den abhängigen Ansprüchen beschrieben.

Nach der vorliegenden Erfindung ist ein faltbarer Modulträger zur Anordnung mehrerer Kollektormodule vorgesehen, bei dem die Module durch auffalten des Modulträgers hintereinander in Reihe angeordnet werden können. Der Modulträger ist insbesondere für Kollektormodule in Form von Photovoltaikmodulen oder thermischen Solarmodulen geeignet. Der Modulträger nach der vorliegenden Erfindung weist wenigstens zwei, vorzugsweise mehrere, Trägereinheiten mit jeweils wenigstens zwei Seitenträgern auf, die zwischen sich wenigstens ein Modul aufnehmen können. Die Trägereinheiten können auch aus mehr als zwei parallelen Seitenträgern bestehen. Die Seitenträger benachbarter Trägereinheiten sind in einer Schwenkebene gelenkig miteinander verbunden. Dabei können die Seitenträger an ihren Enden oder zumindest ihren Endbereichen durch erste Gelenke verbunden sein. Nach der Erfindung ist an jedem Seitenträger wenigstens ein längliches Verbindungselement gelenkig angeordnet. Die Verbindungselemente sind als starre Stangen, Stäbe oder Streben vorgesehen. Die Verbindungselemente sind z. B. durch zweite Gelenke an den Seitenträgern angebracht und in der gleichen Schwenkebene schwenkbar, wie die Seitenträger. Zwei benachbarte Verbindungselemente benachbarter Seitenträger sind gelenkig miteinander derart verbunden, dass der Modulträger faltbar ist. Dabei sind die Verbindungselement miteinander z. B. durch dritte Gelenke ebenfalls in der gleichen Schwenkebene schwenkbar. Der Modulträger ist derart faltbar, dass die Seitenträger und Verbindungselemente in einem gefalteten Zustand dicht bei einander liegen und in einem aufgeweiteten Zustand voneinander entfernt sind. Der Modulträger weist im Wesentlichen einen zigzag-artigen Aufbau auf, der langgezogen oder zusammengeschoben werden kann, wie etwa eine Ziehharmonika. Die Seitenträger und Verbindungselemente des Modulträgers bilden somit ein zusammenklappbares Gestell, auf dem mehrere Kollektormodule in Reihe hintereinander montiert werden können.

Bei dem Modulträger nach der vorliegenden Erfindung wird von zwei miteinander gelenkig verbundenen Seitenträgern und den an diesen vorgesehenen, miteinander verbundenen Verbindungselementen ein Dreieck aufgespannt, bei dem die Verbindungselemente entlang einer Geraden verlaufen, d. h. das dritte Gelenk ist vollständig gestreckt. Wird der Modulträger auf einer ebenen Fläche montiert, kann durch die Anordnung als Dreieck erreicht werden, dass die auf einander folgenden Module jeweils gleiche Anstellwinkel einnehmen. Die Dreiecke wiederholen sich dabei identisch in dem jeweiligen Konstruktionsschema.

Alternativ können miteinander verbundene Seitenträger und Verbindungselemente ein Parallelogramm aufspannen.

Die Kollektormodule können bereits auf den Trägereinheiten des Modulträgers befestigt sein oder erst nach einem Auffalten und Fixieren des Modulträgers auf den Seitenträgern befestigt werden. Dabei kann z. B. auch jede zweite Trägereinheit ohne ein Kollektormodul vorgesehen werden, so dass alle Module im gleichen Winkel angeordnet werden. Es können auch mehrere Module nebeneinander an den Seitenträgern einer Trägereinheit befestigt werden. Die Seitenträger können mit mindestens einer zwischen ihnen befestigten Traverse eine feste Trägereinheit bilden. Die Traversen können auch direkt an den Modulen angebracht sein. Statt der Traverse können die Seitenträger auch mittels einem oder mehreren Kollektormodulen relativ zueinander fixiert werden, so dass die Trägereinheit mit den darauf befestigten Modulen eine Moduleinheit bilden kann. Vorzugsweise wird der Modulträger in gefaltetem Zustand transportiert und an einem gewünschten Ort aufgefaltet und auf einem Untergrund fixiert. Anschliessend werden die Kollektormodule befestigt, da der Modulträger inklusive der Kollektormodule ein grosses Gewicht aufweist und daher schwer handzuhaben ist. Da alle für das Montieren der Kollektormodule notwendigen tragenden Teile bereits mit einander verbunden sind, müssen nicht viele Einzelteile transportiert und vor Ort montiert werden.

Vorzugsweise sind nicht nur zwei sondern eine Vielzahl von Trägereinheiten hintereinander aufgereiht und mit einander gelenkig verbunden, so dass die Trägereinheiten eine Art Kette bilden. Die Anzahl der Trägereinheiten hängt von der Zahl der zu montierenden Module und von den Gegebenheiten des Untergrunds ab. Es ist zumindest jeweils eine erste und eine zweite Trägereinheit mit Verbindungselementen verbunden. Die zweite und eine dritte Trägereinheit können auch ohne Verbindungselemente vorgesehen werden, während zwischen der dritten und einer vierten Trägereinheit wieder Verbindungselemente vorgesehen werden und so fort. In diesem Fall entsprechen also die dritte und die vierte Trägereinheit der ersten und der zweiten Trägereinheit. Alternativ kann auch eine zweite Trägereinheit, beispielsweise mit vier Modulen, ohne physikalische Verbindung als Fortsetzung der Installationskette vorgesehen werden.

Im Wesentlichen sind benachbarte Seitenträger durch die ersten Gelenke, miteinander verbundene Verbindungselemente durch die dritten Gelenke und mit den Seitenträgern verbundene Verbindungselemente durch die zweiten Gelenke zueinander schwenkbar vorgesehen. Die Schwenkachsen der Gelenke verlaufen alle in derselben Schwenkebene. Als Gelenke können z. B. herkömmliche Scharniergelenke verwendet werden. Vorzugsweise ist ein Winkel zwischen benachbarten Seitenträgern, zwischen den gelenkig verbundenen Verbindungselementen und/oder zwischen einem Seitenträger und einem Verbindungselement einstellbar vorgesehen, sodass eine bestimmte Winkeleinstellung, z. B. durch einen Rotationsanschlag vorgegeben sein kann. Es können aber auch verschiedene diskrete Winkelpositionen durch eine Einstell- und Arretiervorrichtung auswählbar sein. Somit kann ein Anstellwinkel der Kollektormodule relative zu einem Untergrund, bzw. zur Sonne, vorbestimmt werden. Beim Aufstellen des Modulträgers muss dieser lediglich auseinander gezogen werden, bis der Rotationsanschlag oder die Arretiervorrichtung blockiert.

Vorzugsweise sind bei dem faltbaren Modulträger nach der Erfindung die an je einem Seitenträger einer Trägereinheit angeordneten Verbindungselemente und/oder die an benachbarten Seitenträgern angeordneten Verbindungselemente zueinander symmetrisch. Die Verbindungselemente weisen z. B. die gleiche Länge auf und/oder die Position ihrer Schwenkachse am Seitenträger sind auf gleicher Höhe. Vorzugsweise haben die wenigstens zwei Seitenträger einer Trägereinheit und auch deren Verbindungselemente jeweils die gleiche Länge. Eine Symmetrieebene kann in Längsrichtung der Modulreihe parallel zwischen den Seitenträgern und Verbindungselement verlaufen. Eine andere Symmetrieebene kann durch die ersten Gelenke benachbarter Seitenträger oder die dritten Gelenke verbundener Verbindungselemente verlaufen. Auf diese Weise können z. B. zwei oder drei aufeinander folgende Trägereinheiten ein Konstruktionsschema bilden, das sich fortlaufend wiederholt, bis eine gewünschte Zahl von Kollektormodulen auf dem Modulträger montiert ist.

Bei einer Variante eines Modulträgers, bei der von zwei miteinander gelenkig verbundenen Seitenträgern und den an diesen vorgesehenen, miteinander verbundenen Verbindungselementen ein Parallelogramm aufgespannt wird, entspricht eine Länge eines Verbindungselements, das mit einem Verbindungselement eines benachbarten Seitenträgers verbunden ist, im Wesentlichen einem Abstand zwischen einer Schwenkachse des Verbindungselements am Seitenträger und einer Schwenkachse der miteinander verbundenen Seitenträger. Das heisst der Abstand zwischen dem ersten Gelenk, das die Seitenträger verbindet, und dem zweiten Gelenk, mit dem das Verbindungselement am Seitenträger vorgesehen ist, entspricht dem Abstand zwischen dem zweiten Gelenk und dem dritten Gelenk mit dem die Verbindungselemente verbunden sind.

Bei einem Modulträger nach der vorliegenden Erfindung ist vorzugsweise die Länge eines Verbindungselements kürzer als ein Abstand zwischen einer Schwenkachse des Verbindungselements am Seitenträger und einer Schwenkachse der Seitenträger, so dass ein Dreieck aufgespannt werden kann, wenn die Verbindungselemente in eine Gerade gestreckt werden. Vorzugsweise haben miteinander verbundene Verbindungselemente jeweils die gleiche Länge. Somit ergibt sich für zwei benachbarte Trägereinheiten der gleiche Anstellwinkel relativ zum Untergrund, wobei jedoch die Winkelpositionen spiegelsymmetrisch zur Senkrechten des Untergrunds sind. Daraus ergibt sich für den Modulträger ein Konstruktionsschema mit alternierend im gleichen Winkel angestellten Modulen. Alternativ können die Verbindungselemente benachbarter Trägereinheiten auch unterschiedliche Längen aufweisen. In diesem Fall sind die ersten, dritten, fünften, etc. Kollektormodule und die zweiten, vierten, sechsten, etc. Kollektormodule jeweils im gleichen Winkel zum Untergrund ausgerichtet, wobei sich die Winkel jedoch unterscheiden.

Eine symmetrische, alternierende Ausrichtung der Kollektormodule mit dem gleichen Anstellwinkel ist z. B. bei einer Montage des Modulträgers in Ost-West Richtung sinnvoll, um im Verlauf eines ganzen Tages eine gleichmässige Bestrahlung aller Module zu erreichen.

In einer weiteren Ausführungsvariante des Modulträgers nach der Erfindung sind die Verbindungselemente in einem mittleren Bereich an den Seitenträgern vorgesehen und können mit ihren Enden von beiden Seiten des Seitenträgers abragen. Sie sind mit einem ersten Ende an einem vorherigen Verbindungselement einer vorherigen Trägereinheit und mit einem zweiten Ende an einem nachfolgenden Verbindungselement einer nachfolgenden Trägereinheit gelenkig verbunden. Im Wesentlichen bilden Seitenträger und Verbindungselement eine gekreuzte, bzw. eine x-förmige Verbindung, deren Schenkel um den Kreuzungspunkt, d. h. das zweite Gelenk beweglich sind. Verbindungselemente und Seitenträger sind vorzugsweise gleich lang. Bei einem Modulträger mit mehreren Trägereinheiten bilden somit die aufeinander folgenden Seitenträger eine zigzag-Linie und auch die aufeinander folgenden Verbindungselemente bilden eine zigzag-Linie, wobei die beiden zigzag-Linien periodisch kreuzen. Bei dieser Variante ragen die Verbindungselement zu beiden Seiten über die Seitenträger hinaus und alle Verbindungselemente sind miteinander an ihren Enden gelenkig verbunden. Dies verleiht dem Modulträger eine robuste Konstruktion.

In einer anderen Ausführungsvariante eines Modulträgers sind die Verbindungselemente mit einem Ende mittig an den Seitenträgern angeordnet und weisen eine Länge auf, die im Wesentlichen der Hälfte der Seitenträger entspricht. Dabei kann es ausreichend sein, dass jeweils die Verbindungselemente einer ersten und einer zweiten Trägereinheit miteinander verbunden sind und die zweite und eine dritte Trägereinheit keine Verbindung mittels Verbindungselementen aufweist. Es können aber auch zwischen der zweiten und dritten Trägereinheit Verbindungselemente vorgesehen sein. Bei dieser Konstruktion liegen das dritte Gelenk zwischen den Verbindungselementen und das erste Gelenk zwischen den Seitenträgern sowohl im gefalteten als auch im aufgefalteten Zustand des Modulträgers auf der gleichen Höhe und können daher beide zur Abstützung und Montage auf einem Untergrund dienen.

Wie erwähnt, können auch zwischen einer zweiten und einer dritten Trägereinheit Verbindungselemente vorgesehen sein. Vorzugsweise sind zwischen der zweiten und der dritten Trägereinheit gelenkig miteinander verbundene Verbindungselemente vorgesehen, deren Länge kürzer ist als die Hälfte der Seitenträger. Ein Abstand zwischen einer Schwenkachse des Verbindungselements am Seitenträger und einer Schwenkachse des Seitenträgers entspricht vorzugsweise der Länge des Verbindungselements. Bei dieser Konstruktion sind nicht nur die ersten und zweiten Trägereinheiten mittels Verbindungselementen in einem bestimmten Winkel zueinander festgelegt, wie z. B. in der vorherigen Variante beschrieben, sondern auch die zweiten und dritten Trägereinheiten können mittels kurzer Verbindungselement zueinander eingestellt werden. Die kurzen Verbindungselement rage jedoch nicht weit nach oben über auf den Trägereinheiten montierte Kollektormodule hinaus und werfen daher nur wenig Schatte, der die Funktion der Module beinträchtigen könnte.

Gemäss noch einer weiteren Ausführungsvariante eines Modulträgers kann an einer ersten Trägereinheit ein erstes Verbindungselement angeordnet sein, dessen Länge der Länge eines Seitenträger einer zweiten, an die erste Trägereinheit anschliessenden Trägereinheit entspricht. Ein zweites Verbindungselement, das an der zweiten Trägereinheit zur Verbindung mit dem ersten Verbindungselement vorgesehen ist, kann durch eine Verlängerung eines Seitenträgers einer dritten Trägereinheit gebildet werden, wobei die dritte Trägereinheit an die zweite Trägereinheit anschliesst. Die Verlängerung und der Seitenträger der dritten Trägereinheit sind vorzugweise einstückig ausgebildet. Das zweite Verbindungselement wird somit von einem Endstück des dritten Seitenträgers gebildet. Das zweite Gelenk, mit dem die Verlängerung an dem zweiten Seitenträger angeordnet ist, entspricht in dieser Variante dem ersten Gelenk mit dem der zweite Seitenträger am dritten Seitenträger angeordnet ist. Dabei definiert die Position des Gelenks zwischen den Seitenträgern der zweiten und dritten Trägereinheit die Länge des zweiten Verbindungselements. Das zweite Verbindungselement entspricht dem Abstand zwischen diesem Gelenk und der gelenkigen Verbindung des ersten Verbindungselements am Ende des dritten Seitenträgers.

Bei dieser Ausführungsvariante ist es vorteilhaft, dass keinerlei Verbindungselemente nach oben über die Flächen der Kollektormodule hervorstehen müssen. Somit werden die Module auch nicht durch Schatten beeinträchtigt.

Die einzelnen Kollektormodule sind in üblicher Weise elektrisch angeschlossen. Eine Verkabelung hierfür kann z. B. entlang der Seitenträger vormontiert sein.

Nach einem weiteren Aspekt der vorliegenden Erfindung wird ein Kollektormodulsystem mit mehreren Kollektormodulen vorgesehen, die auf einem Modulträger, wie oben beschrieben, angeordnet sind, wobei das Kollektormodulsystem faltbar ist. Das System ist für alle Arten von flachen Kollektormodulen geeignet, insbesondere für Photovoltaikmodule und thermische Solarmodule.

Die Erfindung wurde an Hand mehrerer Ausführungsvarianten dargestellt. Die einzelnen technischen Merkmale einer Ausführungsvariante können durchaus auch in Kombination mit einer anderen Ausführungsvariante mit den dargelegten Vorteilen verwendet werden. Die Beschreibung der erfindungsgemässen technischen Merkmale ist daher nicht auf die jeweilige Ausführungsvariante beschränkt.

Vorteilhafte Ausführungsformen der Erfindung werden im Folgenden anhand der Zeichnungen dargestellt, die lediglich zur Erläuterung dienen und nicht einschränkend auszulegen sind. Aus den Zeichnungen offenbar werdende Merkmale der Erfindung sollen einzeln und in jeder Kombination als zur Offenbarung der Erfindung gehörend betrachtet werden. In den Zeichnungen zeigen:
Fig. 1 eine schematische dreidimensionale Ansicht einer ersten Ausführungsvariante eines Modulträgers mit Kollektormodulen,
Fig. 2 eine schematische dreidimensionale Ansicht einer erweiterten Variante der Ausführungsvariante nach Figur 1,
Fig. 3 eine schematische dreidimensionale Ansicht einer zweiten Ausführungsvariante eines Modulträgers mit Kollektormodulen,
Fig. 4a eine schematische dreidimensionale Ansicht einer ersten Version einer dritten Ausführungsvariante eines Modulträgers mit Kollektormodulen nach der Erfindung,
Fig. 4b eine schematische dreidimensionale Ansicht einer zweiten Version einer dritten Ausführungsvariante eines Modulträgers nach der Erfindung,
Fig. 5 eine schematische dreidimensionale Ansicht einer vierten Ausführungsvariante eines Modulträgers mit Kollektormodulen,
Fig. 6a eine schematische Seitenansicht eines Modulträgers in gefaltetem Zustand,
Fig. 6b eine schematische Seitenansicht des Modulträgers aus Figur 6a in aufgefaltetem Zustand und.
Fig. 6c eine schematisch Seitenansicht des Modulträgers aus Figur 6a in komplett aufgefaltetem Zustand.

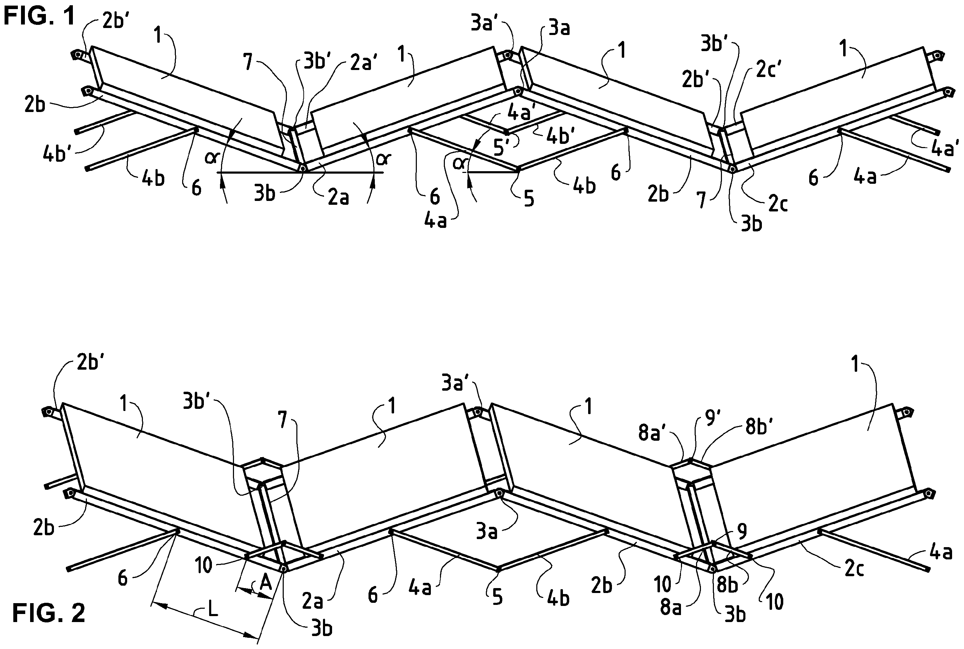

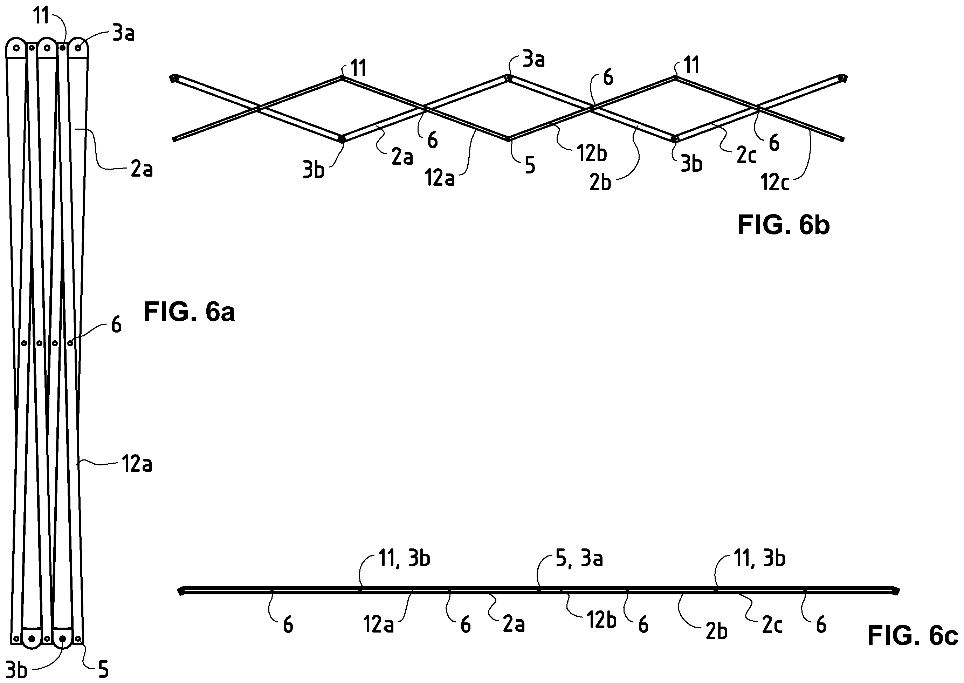

In den Figuren werden verschiedene Ausführungsvarianten von Modulträgern und von Kollektormodulsystem mit solchen Modulträgern gezeigt. Es werden jeweils beispielhaft vier Trägereinheiten eines Modulträgers und entsprechend vier Kollektormodule gezeigt. Die Modulträger können jedoch mehr als vier Trägereinheiten und mehr als vier Kollektormodule aufweisen, also länger sein als dargestellt. Die dargestellten Trägereinheiten demonstrieren das Konstruktionsschema der jeweiligen Ausführungsvariante. Dieses Schema wiederholt sich bei Modulträgern mit mehr als vier Trägereinheiten periodisch. Die Modulträger der Figuren 1 bis 5 sind in aufgefaltetem Zustand gezeigt, um das Konstruktionsschema und den Zustand zu zeigen, in dem sie zur Energieaufnahme verwendet werden. Alle gezeigten Varianten von Trägermodulen können zusammengefaltet werden, wie es in Figur 6a gezeigt ist. Elemente der unterschiedlichen Varianten, welche identisch sind oder die gleiche Funktion haben, sollen weitgehend mit den gleichen Bezugszeichen beziffert werden. Zu deren Beschreibung soll daher auf die Beschreibung zu allen Varianten Bezug genommen werden.

In Figur 1 ist eine erste Ausführungsvariante eines Modulträgers für Kollektormodule 1 gezeigt, die eine erste Trägereinheit mit zwei parallel angeordneten Seitenträgern 2a und 2a' und eine zweite Trägereinheit mit zwei weiteren parallel angeordneten Seitenträger 2b und 2b' aufweist. Die erste und die zweite Trägereinheit demonstrieren eine erste Periode des Konstruktionsschemas des Modulträgers. Die Seitenträger der Trägereinheiten sind jeweils durch Traversen 7 miteinander verbunden. Die Traversen 7 verlaufen in der gezeigten Ausführungsvariante direkt zwischen den Seitenträgern an den Enden der Seitenträger, insbesondere entlang einer Gelenkachse der Seitenträger, wie unten genauer dargestellt wird. Alternativ können die Traversen auch an anderen Stellen angeordnet sein, wie z.B. als Umrandung der Module. Zwischen zwei parallel verlaufenden Seitenträgern 2a und 2a' sowie 2b und 2b' sind jeweils die Kollektormodule 1 in üblicher Weise befestigt. Beispielsweise können die Module auf einer Leiste entlang der Seitenträger verschraubt oder in ein Profil eingeschoben werden. Die benachbarten Seitenträger sind durch erste Gelenke 3 verbunden. Die ersten Gelenke werden derart unterschieden, dass die benachbarten Seitenträger 2a und 2b sowie 2a' und 2b'an ihrem einen Ende durch erste Gelenke 3a und 3a' und an ihrem anderen Ende durch erste Gelenke 3b und 3b' miteinander gelenkig verbunden sind. Beispielsweise sind die Seitenträger 2b und 2b' mit benachbarten Seitenträgern 2c und 2c' mit Gelenken 3b und 3b' verbunden. Die Seitenträger 2c und 2c' gehören zu einer Trägereinheit einer zweiten Periode des Konstruktionsschemas, die sich an die erste Periode anschliesst. Sie entsprechen daher den Seitenträgern 2a und 2a'. Die Bezugszeichen 2c und 2c' werden für ein leichteres Verständnis des Konstruktionsschemas verwendet. Die ersten Gelenke 3a und 3a' sind in aufgefaltetem Zustand des Modulträgers oben angeordnet, d.h. von einem Untergrund entfernt, während die ersten Gelenke 3b und 3b' unten angeordnet sind, d.h. auf oder zumindest nahe einem Untergrund vorgesehen sind. Die ersten Gelenke 3a und 3a' schliessen nach unten einen Winkel kleiner 180° und die ersten Gelenke 3b und 3b' schliessen nach oben einen Winkel kleiner 180°, um eine gewünschte Winkeleinstellung der Module zu erzielen. Grundsätzlich können die Winkel auch gleich 180° sein, d. h. die Seitenträger können vollständig zu einer Linie aufgefaltet werden, sofern eine solche Winkeleinstellung für die Module gewünscht ist. Beim Zusammenfalten des Modulträgers werden diese Winkel verkleinert.

An jedem Seitenträger der Trägereinheiten ist ein längliches Verbindungselement durch ein zweites Gelenk 6 gelenkig angeordnet. An dem Seitenträger 2a ist ein Verbindungselement 4a und an dem Seitenträger 2b ist ein Verbindungselement 4b vorgesehen. Entsprechend ist an dem Seitenträger 2a' ein Verbindungselement 4a' und an dem Seitenträger 2b' ein Verbindungselement 4b' vorgesehen. In der gezeigten Variante sind die Verbindungselement 4a, 4a', 4b und 4b' mit einem Ende mittig an ihrem jeweiligen Seitenträger angeordnet. Zwei benachbarte Verbindungselemente 4a und 4b, bzw. 4a' und 4b', benachbarter Seitenträger 2a und 2b, bzw. 2a' und 2b', sind an ihren Enden durch ein drittes Gelenk 5 gelenkig miteinander derart verbunden, dass der Modulträger faltbar ist. Die Schwenkachsen der ersten Gelenke 3, zweiten Gelenke 6 und dritten Gelenke 5 liegen alle in einer Ebene.

In der zeigten Variante entspricht die Länge der Verbindungselemente 4a, 4a', 4b und 4b' im Wesentlichen dem Abstand des zweiten Gelenks 6 und des ersten Gelenks 3, insbesondere entspricht diese Länge im Wesentlichen der halben Länge der Seitenträger 2a, 2a', 2b und 2b'. Die Seitenträger 2a und 2b, bzw. 2a' und 2b', und die Verbindungselemente 4a und 4b, bzw. 4a' und 4b', spannen gemeinsam ein Parallelogramm auf. Aufgrund der Abmessungen der Seitenträger und der Verbindungselemente liegen die ersten Gelenke 3b, 3b' und die dritten Gelenke 5, 5' auf einer horizontalen Ebene, sodass der Modulträger auf den Enden der Seitenträger und der Verbindungselemente, die in die Gelenke münden abgestützt werden kann. Um die die Gelenke 3 und 5 sind Rollen vorgesehen, die z. B. als Hilfe für Montagezwecke verwendet werden. Vorzugsweise sind die Rollen derart angeordnet, dass das Trägermodul vor dem Befestigen auf einem Untergrund gerollt werden kann.

In der in Figur 1 gezeigten Variante schliesst sich an ein zweites Ende des Seitenträgers 2a ein erstes Ende des Seitenträgers 2b der benachbarten Trägereinheit an. Zusätzlich sind die Seitenträger 2a und 2b über die Verbindungselemente 4a und 4b mit einander verbunden. Die Verbindungselemente 4a und 4b sind auf einer nach unten in Richtung des Untergrunds weisenden Seite des Modulträgers vorgesehen. An dem zweiten Ende des Seitenträgers 2b schliesst sich ein erstes Ende eines Seitenträgers 2c einer nachfolgenden Trägereinheit an und ist mittels eines ersten Gelenks 3b verbunden. Die Verbindung des ersten Endes des Seitenträgers 2c und des zweiten Endes des Seitenträgers 2b verbindet eine weiter Trägereinheit mit der ersten und zweiten Trägereinheit und verbindet somit die Perioden des Konstruktionsschemas des Modulträgers. Die Verbindung weist jedoch keine Verbindungselemente auf. Es ragen somit von den Trägereinheiten in Richtung nach oben keine Verbindungselemente ab, die einen Schatten auf die Kollektormodule 1 werfen könnten.

Vorzugsweise sind an den oberen ersten Gelenken 3a, 3a' Rotationsanschläge vorgesehen, die ein Auffalten der Seitenträger, bzw. der Trägereinheiten, des Modulträgers im Gelenk 3 begrenzen. Die Seitenträger 2a, 2a' und 2b, 2b' weisen die gleiche Länge auf. Beim Auffalten des Modulträgers bis zum Rotationsanschlag und Aufsetzen des Modulträgers auf den ersten Gelenken 3 und den zweiten Gelenken 5 auf einer ebenen horizontalen Unterlage, ergibt sich somit für die Kollektormodule 1 derselbe Anstellwinkel α zwischen Unterseite der Seitenträger 2a und 2b und der Unterlage. Zwischen den Seitenträgern 2a, 2b und den Verbindungselementen 4a, 4b wird ein Parallelogramm mit doppeltem Winkeln α aufgespannt.

Die in Figur 1 gezeigte Variante kann an den unteren ersten Gelenken 3b, 3b', also zwischen den angrenzenden Trägereinheiten ohne Verbindungselemente, beweglich bleiben, so dass beim Fixieren des Modulträgers auf unterschiedliche, bzw. wechselnde, Neigungen einer Unterlage eingegangen werden kann, indem der Winkel an den unteren ersten Gelenken 3b, 3b' frei wählbar ist.

In Figur 2 ist eine weitere Ausführungsvariante eines Modulträgers gezeigt, die im Wesentlichen eine Erweiterung der Variante aus Figur 1 darstellt. Zusätzlich zu den in Bezug auf Figur 1 beschriebenen Verbindungselement 4a und 4b auf einer unteren Seite des Modulträgers sind Verbindungselement 8a, 8a' und 8b, 8b' auf einer oberen Seite des Modulträgers gelenkig vorgesehen. Die Verbindungselement 8a, 8a' und 8b, 8b' sind zwischen einem Seitenträger 2b, der mit seinem zweiten Ende über ein unteres Gelenk 3b an ein erstes Ende eines Seitenträgers 2c anschliesst, und diesem Seitenträger 2c vorgesehen. Die Verbindungselement 8a und 8b sowie 8a' und 8b' sind durch vierte Gelenke 9 und 9' miteinander verbunden. Ferner sind die Verbindungselement 8a, 8a' und 8b, 8b' durch fünfte Gelenke 10 an den Seitenträgern 2a, 2a' und 2b, 2b' angeordnet. Die Schwenkachse der ersten Verbindungselemente 4a, 4a' und 4b, 4b' um die zweiten Gelenke 6 weist zur Schwenkachse der ersten Gelenke 3 einen Abstand L auf (ebenso bei der Variante der Figur 1, jedoch nicht dargestellt). Wie bei Figur 1 sind die Verbindungselemente 4a, 4a' und 4b, 4b' mittig an den Seitenträgern angeordnet. Die Schwenkachse der zweiten Verbindungselemente 8a, 8a' und 8b, 8b' um die fünften Gelenke 10 weist zur Schwenkachse der unteren, ersten Gelenke 3b einen Abstand A auf, der kürzer ist als der Abstand L. Der Abstand der Schwenkachse der fünften Gelenke 10 zu den vierten Gelenken 9 entspricht im Wesentlichen dem Abstand A, so dass in aufgefaltetem Zustand zwischen den zweiten Verbindungselementen 8a, 8b und den Seitenträgern 2b, 2a wiederum ein Parallelogramm aufspannt. Die zweiten Verbindungselemente 8a, 8a' und 8b, 8b' dienen einer Festigung und Führung der Struktur des Modulträgers.

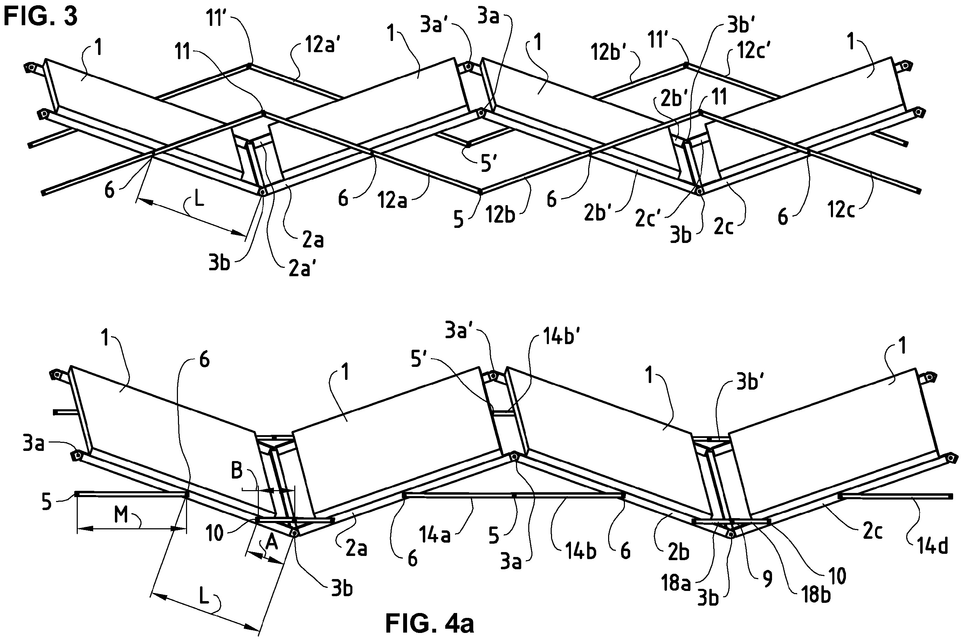

In Figur 3 ist eine zweite Variante eines Trägermoduls mit Kollektormodulen 1 gezeigt. Die Konstruktion der Seitenträger 2a, 2a' und 2b, 2b' entspricht derjenigen aus den vorhergehenden Varianten. An den Seitenträgern sind jeweils Verbindungselemente 12a, 12a' und 12b, 12b' durch zweite Gelenke 6 gelenkig angeordnet. Die Verbindungselemente 12a, 12a' und 12b, 12b' sind im Wesentlichen auf halber Länge der Seitenträger 2a, 2a' und 2b, 2b' angeordnet und ragen zu beiden Seiten über die Seitenträger hinaus, also sowohl nach unten in Richtung eines Untergrunds als auch nach oben von dem Untergrund weg. Die Verbindungselemente 12a, 12a' und 12b, 12b' sind zu beiden Seiten der Seitenträger gleich lang und weisen im Wesentlichen die gleiche Länge wie die Seitenträger auf. Die nach unten ragenden Enden der Verbindungselemente 12a und 12b, bzw. 12a' und 12b', sind durch dritte Gelenke 5, 5' miteinander verbunden. Das nach oben ragende Ende des Verbindungselements 12b, 12b' ist mit einem nach oben ragenden Ende eines Verbindungselements 12c, 12c' einer benachbarten Trägereinheit durch sechste Gelenke 11, 11' verbunden. Wiederum entspricht das Verbindungselement 12c dem Verbindungselement 12a, wie vorher erläutert. Die Länge L zwischen den Schwenkachsen der ersten Gelenke 3a oder 3b und den zweiten Gelenken 6 entspricht der Länge zwischen den Schwenkachsen der zweiten Gelenke 6 und den dritten Gelenken 5 oder den sechsten Gelenken 11.

Die Seitenträger 2a und 2b bilden eine erste durchgehende zigzag-Linie entlang des Trägermoduls. Die Verbindungselement 12a, 12b, 12c bilden in dieser Variante eine zweite durchgehende zigzag-Linie entlang des Trägermoduls. Die zigzag-Linien sind zueinander um eine halbe Periode versetzt, also spiegelsymmetrisch entlang einer horizontalen Ebene. Wiederum bilden die Seitenträger und Verbindungselemente in aufgefaltetem Zustand zwischen sich Parallelogramme und zwar ein unteres Parallelogramm mit den ersten Gelenken 3a, zweiten Gelenken 6 und dritten Gelenken 5 und auch ein oberes Parallelogramm mit den ersten Gelenken 3b, zweiten Gelenken 6 und sechsten Gelenken 11.

Die Verbindungselemente 12a, 12b entsprechen auf der unteren Seite den Verbindungselementen 4a, 4b der ersten Variante, sind jedoch über die Seitenträger 2a, 2b symmetrisch verlängert. Die Enden der Verbindungselemente und Seitenträger an den unteren ersten Gelenken 3b und den dritten Gelenke 5 bilden wiederum Abstützungen für den Modulträger. Die zusätzlichen oberen Verbindungen mit den sechsten Gelenkten 11, 11' bilden eine Verstärkung für die Struktur des Modulträgers.

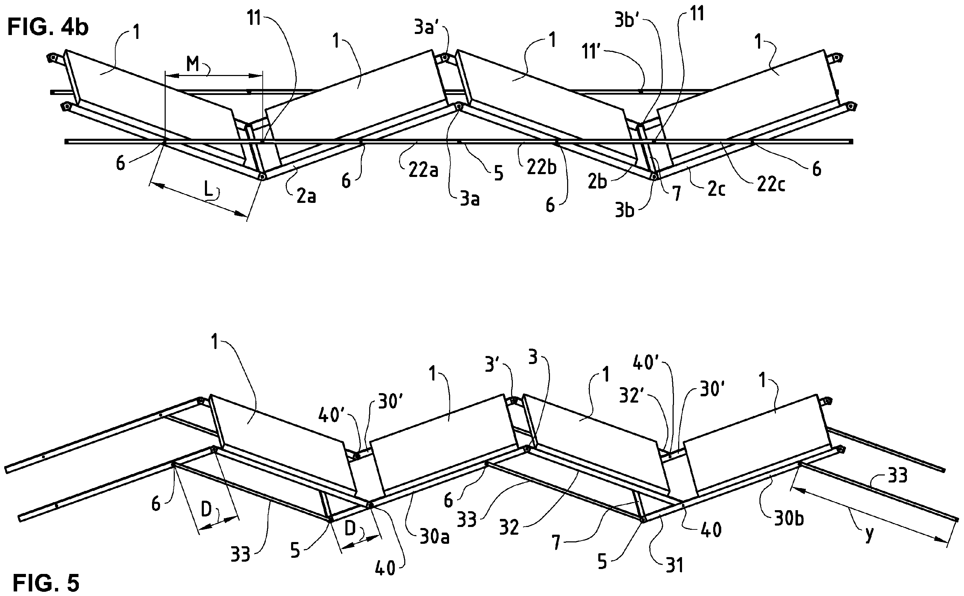

In den Figuren 4a und 4b sind zwei Versionen einer Ausführungsvariante eines Modulträgers nach der Erfindung gezeigt, bei welchen in aufgefaltetem Zustand zwischen Seitenträgern und Verbindungselementen kein Parallelogramm, sondern ein Dreieck aufgespannt wird. In einem gefalteten Zustand sind die Verbindungselemente zueinander gewinkelt. Die Konstruktion der Seitenträger 2a, 2a' und 2b, 2b' entspricht derjenigen aus den vorhergehenden Varianten.

In Figur 4a ist eine erste Version eines Modulträgers nach der Erfindung gezeigt, bei der an den Seitenträgern jeweils Verbindungselemente 14a, 14a' und 14b, 14b' durch zweite Gelenke 6 gelenkig angeordnet. Die Verbindungselemente 14a, 14a' und 14b, 14b' sind im Wesentlichen auf halber Länge der Seitenträger 2a, 2a' und 2b, 2b' angeordnet. Die Enden der Verbindungselemente 14a, 14a' und 14b, 14b' sind durch dritte Gelenke 5, 5' miteinander verbunden. Im Vergleich zu den Verbindungselementen 4a, 4a' und 4b, 4b' sind die Verbindungselemente 14a, 14a' und 14b, 14b' jedoch kürzer. Das heisst, die Länge L zwischen den Schwenkachsen der ersten Gelenke 3a, bzw. 3b, und den Schwenkachsen der zweiten Gelenke 6 entlang der Seitenträger 2a, 2b ist länger als eine Länge M zwischen den Schwenkachsen der zweiten Gelenke 6 und den Schwenkachsen der dritten Gelenke 5 entlang der Verbindungselement 14a und 14b.

In aufgefaltetem Zustand sollen die Seitenträger 2a, 2a' und 2b, 2b' soweit gestreckt sein, dass die dritten Gelenke 5 einen 180° Winkel einschliessen und somit die Verbindungselement 14a und 14b, bzw. 14a' und 14b', eine Gerade bilden. Zwischen den Seitenträger 2a und 2b und der Geraden der Verbindungselemente 14a und 14b ist somit ein Dreieck ausgebildet. Aufgrund der Befestigung der Verbindungselement an den Seitenträgern und miteinander ist ein weitere Strecken des Modulträgers nicht möglich. Durch die Verwendung von Verbindungselementen unterschiedlicher Länge kann die Länge der Geraden eingestellt werden, so dass ein maximaler Öffnungswinkel zwischen den Seitenträgern 2a und 2b an den ersten Gelenken 3a eingestellt werden kann.

Grundsätzlich ist es auch möglich, das Trägermodul nicht soweit aufzufalten, bis die Verbindungselemente 14a und 14b eine Gerade bilden. In diesem Fall entsteht zwischen den Seitenträger 2a und 2b und den Verbindungselementen 14a und 14b ein Viereck mit einer nach unten in Richtung einer Unterlage gerichteten Ecke.

Analog den Verbindungselementen 8a und 8b aus der in Figur 2 gezeigten Variante können bei der Version aus Figur 4a Verbindungselemente 18a und 18b verwendet werden, die kürzer sind als die Verbindungselemente 8a und 8b. Demnach ist ein Abstand A zwischen einer Schwenkachse eines unteren dritten Gelenks 3b und einem fünften Gelenk 10 entlang den Seitenträgern grösser als ein Abstand B zwischen einer Schwenkachse eines fünften Gelenks 10 und einem vierten Gelenk 9 entlang den Verbindungselementen 18a und 18b. In maximal geöffnetem Zustand der unteren ersten Gelenke 3b sind die Verbindungselemente 18a und 18b zu einer Gerade gestreckt.

Die Länge M und der Abstand B sind vorzugsweise derart aufeinander abgestimmt, dass in vollständig gestrecktem Zustand des Modulträgers die Geraden der Verbindungselemente 14a und 14b und der Verbindungselemente 18a und 18b parallel zu einander und zu einer Unterlage verlaufen. Somit können alle unteren ersten Gelenke 3b der Trägereinheiten des Modulträgers auf der Unterlag aufliegen. Vorteilhafterweise stehen bei dieser Ausführungsvariante nach Figur 4a keine Elemente des Modulträgers nach oben ab.

In Figur 4b ist eine zweite Version eines Modulträgers nach der Erfindung gezeigt, die zusammengefasst eine Abwandlung der Modulträgervariante aus Figur 3 in Kombination mit Verbindungselementen entsprechend der ersten Version aus Figur 4a darstellt. An den Seitenträgern 2a, 2a' und 2b, 2b' sind jeweils Verbindungselemente 22a, 22a' und 22b, 22b' durch zweite Gelenke 6 gelenkig angeordnet. Die Verbindungselemente 22a, 22a' und 22b, 22b' sind im Wesentlichen auf halber Länge der Seitenträger 2a, 2a' und 2b, 2b' angeordnet und ragen zu beiden Seiten gleich lang über die Seitenträger hinaus. Benachbarte Verbindungselemente 22a und 22b sind zum einen durch dritte Gelenke 5, 5' und zum anderen durch sechste Gelenke 11, 11', wie bei den Verbindungselementen 22b und 22c, gelenkig verbunden. Die Länge der Verbindungselemente 22a und 22b ist jedoch kürzer als bei den Verbindungselementen 12a und 12b der Variante aus Figur 3 und entspricht dem Abstand M, wie vorher beschrieben. Die Verbindungselemente 22a und 22b stehen daher zu beiden Seiten der Seitenträger mit einer Länge entsprechend dem Abstand M hinaus und sind jeweils mit benachbarten Verbindungselementen durch dritte Gelenke 5 und sechste Gelenke 11 verbunden. In aufgefaltetem, völlig gestrecktem Zustand des Modulträgers bilden die Verbindungselement 22a und 22b eine einzige Linie entlang des Modulträgers, die parallel zu einem Untergrund verläuft. In diesem Zustand kann der Modulträger wiederum mit den Enden der Seitenträger an den untern ersten Gelenken 3b, 3b' auf den Untergrund aufgesetzt werden. Die Länge der Verbindungselemente 22a und 22b ist vorzugweise gleich und auf einen gewünschten maximalen Öffnungswinkel der ersten Gelenke 3 abgestimmt, durch den auch der Anstellwinkel der Kollektormodule 1 bestimmt wird. Eine solche Variante eines Trägermoduls ist sehr robust und kann schnell aufgestellt werden, ohne viel Aufwand zur Winkeleinstellung der Module erforderlich ist.

In Figur 5 ist eine vierte Variante eines Modulträgers mit Kollektormodulen gezeigt. Die Variante wird anhand von drei aufeinanderfolgenden Trägereinheiten erläutert, wobei eine dritte Trägereinheit einer ersten Trägereinheit entspricht. Die erste Trägereinheit weist erste Seitenträger 30a, 30a' auf. Analog weist die dritte Trägereinheit erste Seitenträger 30b, 30b' auf. Eine zweite Trägereinheit weist zweite Seitenträger 32, 32' auf. Der erste Seitenträger 30a, 30a' und der zweite Seitenträger 32, 32' sind durch erste Gelenke 3, 3' verbunden. Die zweite Seitenträger 32, 32' sind mit den weiteren ersten Seitenträgern 30b, 30b' durch siebte Gelenke 40, 40' verbunden. An den ersten Seitenträgern 30a, 30a', bzw. 30b, 30b' sind erste Verbindungselemente 33 vorgesehen, die an einem ersten Ende durch ein zweites Gelenk 6 am Seitenträger angeordnet sind. Eine Länge Y der ersten Verbindungselemente 33 entspricht der Länge der zweiten Seitenträger 32. Die ersten Seitenträger 30a, bzw. 30b, weisen eine Verlängerung 31 auf, die sich in Längsrichtung der der ersten Seitenträger erstreckt. Vorzugsweise sind ein erster Seitenträger und seine Verlängerung einstückig als ein einziger Träger ausgebildet. Die Länge D der Verlängerung 31 wird durch die Position des siebten Gelenks 40 vom Ende des Seitenträgers bestimmt. Die Verlängerung 31 übernimmt die Funktion eines zweiten Verbindungselements, das an dem zweiten Seitenträger 32 gelenkig angeordnet ist. Ein zweites Ende des Verbindungselements 32 ist am Ende der Verlängerung 31 durch ein drittes Gelenk 5 angeordnet. Der Abstand zwischen dem ersten Gelenk 3, 3' und dem zweiten Gelenk 6 entspricht der Länge D. In dieser Ausführungsvariante ist der erste Seitenträger 30a, 30b zusammen mit der Verlängerung 31 länger als der zweite Seitenträger 32.

In aufgefaltetem Zustand bilden die Seitenträger 30a, 30b, der Seitenträger 32 und das Verbindungselement 33 ein Parallelogramm. Der Modulträger liegt mit den zweiten Enden des Verbindungselements 32 und dem Ende der Verlängerung 31 an dritten Gelenken 5 der Trägereinheiten auf einer Unterlage auf. Die Kollektormodule 1 werden nicht von Elementen des Modulträgers überragt, so dass keine Gefahr der Beschattung der Module besteht. Der Modulträger weist nur eine geringe Zahl von Einzelteilen auf, so dass er schnell vormontiert werden kann.

Alle dargestellten Ausführungsvarianten, bzw. Versionen, eines Modulträgers nach der Erfindung sind symmetrisch zu einer Mittelebene durch die parallel verlaufenden Seitenträger. Darüber hinaus sind die Varianten der Figuren 1 bis 5 symmetrische zu einer senkrechten Ebene durch die ersten Gelenke 3. Bei allen Ausführungsvarianten wiederholt sich das jeweils beschriebene Konstruktionsschema periodisch. Die Anzahl der in einem Modulträger verwendeten Trägereinheiten richtet sich nach der gewünschten Zahl an Kollektormodulen, die auf dem Modulträger angebracht werden sollen.

Die dargestellten Ausführungsvarianten der Modulträger können an den ersten Gelenken 3, wie oben erwähnt, oder auch an anderen Gelenken des Modulträgers Rotationsanschläge vorgesehen sein, die einen Auffaltwinkel des Modulträgers begrenzen.

Bei den Varianten eines Modulträgers nach der Erfindung nach den Figuren 4a und 4b erübrigt sich ein solcher Anschlag jedoch. Ein Rotationsanschlag kann z. B. dadurch gebildet werden, dass ein Ende eines ersten Seitenträgers 2a eine Platte mit mehreren auf einem Radius der Schwenkachse verteilten Löchern aufweist. Ein Anschlagstift kann in einer vorbestimmten Winkelposition in ein der Position entsprechendes Loch eingesetzt werden und beim Auffalten des Trägermoduls als Anschlag dienen. Entsprechend kann eine solche Lochplatte an einem Ende eines Verbindungselements vorgesehen sein.

In den Figuren 6a, 6b und 6c ist ein Modulträger ohne Kollektormodule nach der Ausführungsvariante der Figur 3 in einem zusammen geklappten Zustand (Figur 6a), in einem aufgefalteten Zustand (Figur 6b) und in einem vollständig gestreckten Zustand (Figur 6c) gezeigt.

Wie Figur 6a zeigt, kann der Modulträger auf ein geringes Volumen zusammen geschoben werden. Dabei kommen alle oberen ersten Gelenke 3a und alle unteren ersten Gelenke 3b neben einander zu liegen. Da in dieser Variante die Verbindungselement 12a und 12b die gleiche Länge wie die Seitenträger 2a und 2b haben, kommen die sechsten Gelenke 11 zwischen den oberen ersten Gelenke 3a zu liegen und die dritten Gelenke 5 kommen zwischen den unteren ersten Gelenken 3b zu liegen. Die zweiten Gelenke 6 liegen in der Mitte zwischen den Gelenken 3a und 3b, bzw. den Gelenken 5 und 11. In Figur 6b ist ersichtlich, dass die Seitenträger 2a und 2b mit den Verbindungselementen 12a und 12b Parallelogramme aufspannen. Die unteren Enden der Seitenträger 2a und 2b und die unteren Enden der Verbindungselemente 12a und 12b münden in die unteren ersten Gelenke 3b und die dritten Gelenke 5, wobei die unteren ersten Gelenke 3b und die dritten Gelenke 5 auf einer Linie liegen. In Figur 6c ist der Modulträger komplett aufgefaltet, so dass die dritten Gelenke 5 und die sechsten Gelenkte 11 einen Winkel von 180° einschliessen und die Verbindungselemente 12a, 12b und 12c eine Gerade bilden. Ebenso sind die Seitenträger 2a, 2b und 2c vollständig gestreckt und bilden eine Gerade. Die Geraden der Seitenträger und der Verbindungselemente verlaufen parallel, wobei die Verbindungselemente an einer Aussenseite der Seitenträger an diesen anliegen. Ein vollständiges Auffalten ist auch bei den Ausführungsvarianten der Modulträger aus den Figuren 1, 2 und 5 möglich.

**Bezugszeichen**

| | | | |
|---|---|---|---|
| 1 | Kollektormodul | 12a, 12a' | Verbindungselement |
| 2a, 2a' | Seitenträger | 12b, 12b' | Verbindungselement |
| 2b, 2' | Seitenträger | 14a, 14a' | Verbindungselement |
| 3 | erstes Gelenk | 14b, 14b' | Verbindungselement |
| 3a, 3a' | oberes erstes Gelenk | 30 | Seitenträger |
| 3b, 3b' | unteres erstes Gelenk | 31 | Verlängerung |
| 4a, 4a' | erstes Verbindungselement | 32 | Seitenträger |
| 4b, 4b' | zweites Verbindungselement | 33 | Verbindungselement |
| 5, 5' | drittes Gelenk | 40 | siebtes Gelenk |
| 6, 6' | zweites Gelenk | | |
| 7 | Traverse | α | Anstellwinkel |
| 8a, 8a' | erstes Verbindungselement | A | Abstand |
| 8b, 8b' | zweites Verbindungselement | D | Länge Verlängerung |
| 9, 9' | viertes Gelenk | L | Abstand |
| 10, 10' | fünftes Gelenk | M | Länge |
| 11, 11' | sechstes Gelenk | Y | Länge Verbindungselement 33 |

## Patentansprüche

1. Modulträger zum hintereinander Anordnen mehrerer Kollektormodule (1), der wenigstens zwei Trägereinheiten mit jeweils wenigstens zwei Seitenträgern (2a, 2b) aufweist, wobei die Seitenträger zwischen sich wenigstens ein Kollektormodul (1) aufnehmen können und die Seitenträger benachbarter Trägereinheiten in einer Schwenkebene gelenkig miteinander verbunden sind, wobei an jedem Seitenträger wenigstens ein längliches Verbindungselement (14a, 14b; 18a, 18b; 22a, 22b) gelenkig vorgesehen ist und zwei benachbarte Verbindungselemente (14a, 14b; 18a, 18b; 22a, 22b) benachbarter Seitenträger (2a, 2b) gelenkig miteinander derart verbunden sind, dass der Modulträger faltbar ist
**dadurch gekennzeichnet, dass**
von zwei miteinander gelenkig verbundenen Seitenträgern (2a, 2b) und den an diesen vorgesehenen, miteinander verbundenen Verbindungselementen (14a, 14b; 18a, 18b; 22a, 22b) ein Dreieck aufgespannt ist.

2. Modulträger nach Anspruch 1, **dadurch gekennzeichnet, dass** ein Winkel zwischen benachbarten Seitenträgern (2a, 2b), und/oder zwischen einem Seitenträger und einem Verbindungselement einstellbar ist.

3. Modulträger nach einem der vorhergehenden Ansprüche, **dadurch gekennzeichnet, dass** die an je einem Seitenträger (2a, 2a') einer Trägereinheit angeordneten Verbindungselemente (14a; 22a) und/oder die an benachbarten Seitenträgern (2a, 2b) angeordneten Verbindungselemente (14a, 14b; 18a, 18b; 22a, 22b) zueinander symmetrisch sind in Bezug auf ihre Länge und/oder ihre Schwenkachse am Seitenträger.

4. Modulträger nach einem der vorhergehenden Ansprüche, **dadurch gekennzeichnet, dass** die Verbindungselemente (14a, 14b; 18a, 18b; 22a, 22b) in der Schwenkebene schwenkbar an den Seitenträgern (2a, 2b) vorgesehen sind.

5. Modulträger nach einem der vorhergehenden Ansprüche, **dadurch gekennzeichnet, dass** die Verbindungselement (14a, 14b; 18a, 18b; 22a, 22b) in einem Bereich zwischen den Enden eines Seitenträgers (2a, 2b) angeordnet sind.

6. Modulträger nach einem der vorhergehenden Ansprüche, **dadurch gekennzeichnet, dass** eine Länge (M) eines Verbindungselements (14a, 14b; 18a, 18b; 22a, 22b) kürzer ist als ein Abstand (L) zwischen einer Schwenkachse des Verbindungselements am Seitenträger und einer Schwenkachse der Seitenträger (2a, 2b).

7. Modulträger nach dem vorhergehenden Anspruch, **dadurch gekennzeichnet, dass** in einem aufgefalteten Zustand des Modulträgers die Verbindungselemente (14a, 14b; 18a, 18b; 22a, 22b) in einer Linie ausgerichtet und in einem gefalteten Zustand zueinander gewinkelt sind.

8. Modulträger nach einem der Ansprüche 1 bis 5, **dadurch gekennzeichnet, dass** die Verbindungselemente (22b) in einem mittleren Bereich an den Seitenträgern (2a, 2b) vorgesehen sind und mit einem ersten Ende an einem vorherigen Verbindungselement (22a) einer vorherigen Trägereinheit und mit einem zweiten Ende an einem nachfolgenden Verbindungselement (22c) einer nachfolgenden Trägereinheit gelenkig verbunden ist.

9. Modulträger nach einem der vorhergehenden Ansprüche, **dadurch gekennzeichnet, dass** zwischen der zweiten und einer dritten Trägereinheit gelenkig miteinander verbundene Verbindungselemente (14a, 14b; 18a, 18b) vorgesehen sind, deren Länge kürzer ist als die Hälfte (L) der Seitenträger ist.

10. Modulträger nach einem der vorhergehenden Ansprüche, **dadurch gekennzeichnet, dass** ein Gelenk (3b, 3b') zwischen den Seitenträgern und/oder ein Gelenk (5, 5') zwischen den Verbindungselementen (4a, 4b; 12a, 12b) als Abstützung auf einem Untergrund vorgesehen ist.

11. Modulträger nach einem der vorhergehenden Ansprüche, **dadurch gekennzeichnet, dass** ein erster Seitenträger (2a) oder ein erstes Verbindungselement (14a; 18a; 22a) an einem Ende gelenkig mit einem Ende eines zweiten Seitenträgers (2b) oder eines zweiten Verbindungselements (14b; 18b; 22b) verbunden ist, wobei das Ende des ersten Seitenträgers eine Platte mit mehreren auf einem Radius der Schwenkachse verteilten Löchern aufweist, wobei ein Anschlagstift in ein Loch einsetzbar ist, das einer vorbestimmten Winkelposition entspricht.

12. Kollektormodulsystem mit mehreren in Reihe angeordneten Kollektormodulen (1), die auf einem Modulträger nach einem der Ansprüche 1 bis 11 montiert sind, das faltbar ist.

## Claims

1. Module carrier for disposing a plurality of collector modules (1) behind one another, which has at least two support units each with at least two lateral supports (2a, 2b), the lateral supports being able to receive between them at least one collector module (1) and the lateral supports of adjacent support units being connected together in an articulated way in a pivot plane, whereby provided in an articulated way at each lateral support is at least one elongated connecting element (14a, 14b; 18a, 18b; 22a, 22b) and two adjacent connecting elements (14a, 14b; 18a, 18b; 22a, 22b) of adjacent lateral supports (2a, 2b) being connected together in an articulated way such that the module carrier is foldable
**characterized in that**
a triangle is formed by two lateral supports (2a, 2b) connected together in an articulated way and by the connected-together connecting elements (14a, 14b; 18a, 18b; 22a, 22b) provided on these lateral supports.

2. Module carrier according to claim 1, **characterized in that** an angle between adjacent lateral supports (2a, 2b), and/or between a lateral support and a connecting element is adjustable.

3. Module carrier according to one of the preceding claims, **characterized in that** the connecting elements (14a; 22a) each disposed on a lateral support (2a, 2a') of a support unit and/or the connecting elements (14a, 14b; 18a, 18b; 22a, 22b) disposed on adjacent lateral supports (2a, 2b) are symmetrical to one another with respect to their length and/or their pivot axis on the lateral support.

4. Module carrier according to one of the preceding claims, **characterized in that** the connecting elements (14a, 14b; 18a, 18b; 22a, 22b) are provided on the lateral supports (2a, 2b) in a way pivotable in the pivot plane.

5. Module carrier according to one of the preceding claims, **characterized in that** the connecting element <sic. elements> (14a, 14b; 18a, 18b; 22a, 22b) are disposed in a region between the ends of a lateral support (2a, 2b).

6. Module carrier according to one of the preceding claims, **characterized in that** a length (M) of a connecting element (14a, 14b; 18a, 18b; 22a, 22b) is shorter than a spacing (L) between a pivot axis of the connecting element on the lateral support and a pivot axis of the lateral support (2a, 2b).

7. Module carrier according to the preceding claim, **characterized in that** in an unfolded state of the module carrier the connecting elements (14a, 14b; 18a, 18b; 22a, 22b) are aligned in one line and in a folded state are at an angle to one another.

8. Module carrier according to one of the claims 1 to 5, **characterized in that** the connecting elements (22b) are provided in a central region on the lateral supports (2a, 2b) and is <sic. are> connected in an articulated way with a first end on a preceding connecting element (22a) of a preceding support unit and with a second end on a subsequent connecting element (22c) of a subsequent support unit.

9. Module carrier according to one of the preceding claims, **characterized in that** provided between the second and a third support unit are connecting elements (14a, 14b; 18a, 18b) connected together in an articulated way, whose length is shorter than half (L) of the lateral supports.

10. Module carrier according to one of the preceding claims, **characterized in that** provided as support on a substrate is a hinge (3b, 3b') between the lateral supports and/or a hinge (5, 5') between the connecting elements (4a, 4b; 12a, 12b).

11. Module carrier according to one of the preceding claims, **characterized in that** a first lateral support (2a) or a first connecting element (14a; 18a; 22a) is connected at one end in an articulated way to an end of a second lateral support (2b) or of a second connecting element (14b; 18b; 22b), the end of the first lateral support having a plate with a plurality of holes distributed on a radius of the pivot axis, a stop pin being insertable into a hole that corresponds to a predetermined angular position.

12. Collector module system with a plurality of collector modules (1) disposed in rows which are mounted on a module carrier according to one of the claims 1 to 11, which collector module system is foldable.

## Revendications

1. Support de module pour la disposition d'une pluralité de modules collecteurs (1) les uns derrière les autres, qui possède au moins chacun deux unités de support avec au moins deux supports latéraux (2a, 2b), les supports latéraux pouvant recueillir entre eux au moins un module collecteur (1), et les supports latéraux d'unités de support adjacentes étant reliés entre eux de manière articulée dans un plan de pivotement, dans lequel au moins un élément de liaison (14a, 14b ; 18a, 18b ; 22a, 22b) allongé est agencé de manière articulée à chaque support latéral, et deux éléments de liaison (14a, 14b ; 18a, 18b ; 22a, 22b) adjacents de supports latéraux adjacents (2a, 2b) étant reliés entre eux de manière articulée de telle sorte que le support de module soit pliable,
**caractérisé en ce**
**qu'**un triangle est formé par deux supports latéraux (2a, 2b) reliés entre eux de manière articulée, et par des éléments de liaison reliés entre eux (14a, 14b ; 18a, 18b ; 22a, 22b) agencés sur ces supports latéraux.

2. Support de module selon la revendication 1, **caractérisé en ce qu'**un angle entre les supports latéraux adjacents (2a, 2b) et/ou entre un support latéral et un élément de liaison est réglable.

3. Support de module selon l'une des revendications précédentes, **caractérisé en ce que** les éléments de liaison (14a ; 22a) disposés chacun sur un support latéral (2a, 2a') d'une unité de support et/ou les éléments de liaison (14a, 14b ; 18a, 18b ; 22a, 22b) disposés sur des supports latéraux adjacents (2a, 2b) sont symétriques les uns par rapport aux autres selon leur longueur et/ou leur axe de pivotement sur le support latéral.

4. Support de module selon l'une des revendications précédentes, **caractérisé en ce que** les éléments de liaison (14a, 14b ; 18a, 18b ; 22a, 22b) sont agencés sur les supports latéraux (2a, 2b) de façon pivotante dans le plan de pivotement.

5. Support de module selon l'une des revendications précédentes, **caractérisé en ce que** les éléments de liaison (14a, 14b ; 18a, 18b ; 22a, 22b) sont disposés dans une zone située entre les extrémités d'un support latéral (2a, 2b).

6. Support de module selon l'une des revendications précédentes, **caractérisé en ce que** la longueur (M) d'un élément de liaison (14a, 14b ; 18a, 18b ; 22a, 22b) est plus courte que l'espacement (L) entre l'axe de pivotement de l'élément de liaison sur le support latéral et l'axe de pivotement du support latéral (2a, 2b).

7. Support de module selon la revendication précédente, **caractérisé en ce que**, dans un état déplié du support de module, les éléments de liaison (14a, 14b ; 18a, 18b ; 22a, 22b) s'étendent selon une même direction, et, dans un état plié, présentent un angle les uns par rapport aux autres.

8. Support de module selon l'une des revendications 1 à 5, **caractérisé en ce que** les éléments de liaison (22b) sont agencés au niveau d'une zone centrale des supports latéraux (2a, 2b), et sont reliés de manière articulée à une première extrémité d'un élément de liaison précédent (22a) d'une unité de support précédente, et à une deuxième extrémité d'un élément de liaison (22c) précédent d'une unité de support suivante.

9. Support de module selon l'une des revendications précédentes, **caractérisé en ce que** des éléments de liaison reliés (14a, 14b ; 18a, 18b) reliés entre eux de manière articulée sont agencés entre la deuxième unité de support et une troisième unité de support, dont la longueur est plus courte que la moitié (L) des supports latéraux.

10. Support de module selon l'une des revendications précédentes, **caractérisé en ce qu'**une charnière (3b, 3b') entre les supports latéraux et/ou une charnière (5, 5') entre les éléments de liaison (4a, 4b ; 12a, 12b) est agencée comme support sur un substrat.

11. Support de module selon l'une des revendications précédentes, **caractérisé en ce qu'**un premier support latéral (2a) ou un premier élément de liaison (14a ; 18a ; 22a) est relié de manière articulée via une extrémité à une extrémité d'un deuxième support latéral (2b) ou d'un deuxième élément de liaison (114b ; 18b ; 22b), l'extrémité du premier support latéral possédant une plaque munie d'une pluralité de trous distribués sur un rayon de l'axe de pivotement, une goupille de butée pouvant être insérée dans un trou qui correspond à une position angulaire prédéterminée.

12. Système de module collecteur possédant une pluralité de modules collecteurs (1) disposés en rangées, qui sont montés sur un support de module selon l'une des revendications 1 à 11, lequel système de module collecteur est pliable.
